(19) **Europäisches Patentamt European Patent Office Office européen des brevets**

(11) **EP 2 485 903 B1**

(12) **FASCICULE DE BREVET EUROPEEN**

(45) Date de publication et mention
de la délivrance du brevet:
**29.04.2015 Bulletin 2015/18**

(21) Numéro de dépôt: **10760709.5**

(22) Date de dépôt: **05.10.2010**

(51) Int Cl.:
**B60C 9/00** *(2006.01)*          **B60C 9/08** *(2006.01)*
**B60C 5/14** *(2006.01)*

(86) Numéro de dépôt international:
**PCT/EP2010/064827**

(87) Numéro de publication internationale:
**WO 2011/042435 (14.04.2011 Gazette 2011/15)**

(54) **PNEUMATIOUE COMPORTANT DES CABLES D'ARMATURES DE CARCASSE PRESENTANT UNE FAIBLE PERMEABILITE, ET DES EPAISSEURS DE MELANGES CAOUTCHOUTEUX VARIABLES**

REIFEN MIT KARKASSENVERSTÄRKUNGSSEILEN MIT GERINGER PERMEABILITÄT UND VARIABLEN KAUTSCHUKMISCHUNGSDICKEN

TIRE COMPRISING CASING REINFORCEMENT CABLES HAVING A LOW PERVIOUSNESS, AND VARIABLE RUBBER MIXTURE THICKNESSES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.10.2009 FR 0956991**

(43) Date de publication de la demande:
**15.08.2012 Bulletin 2012/33**

(73) Titulaires:
• **COMPAGNIE GENERALE DES ETABLISSEMENTS MICHELIN**
**63000 Clermont-Ferrand (FR)**
• **MICHELIN Recherche et Technique S.A.**
**1763 Granges-Paccot (CH)**

(72) Inventeurs:
• **DOMINGO, Alain**
**F-63190 Orleat (FR)**
• **CHAULET, Christelle**
**F-63100 Clermont-Ferrand (FR)**

(74) Mandataire: **Le Cam, Stéphane Georges Elie Manufacture Francaise des Pneumatiques Michelin**
**23, place des Carmes-Déchaux**
**SGD/LG/PI - F35- Ladoux**
**63040 Clermont-Ferrand Cedex 9 (FR)**

(56) Documents cités:
EP-A- 0 760 298      EP-A- 1 602 780
FR-A- 2 429 681      FR-A- 2 795 751
FR-A- 2 873 721      US-A- 3 495 645
US-A- 4 305 446      US-A- 5 824 170

## Description

La présente invention concerne un pneumatique, à armature de carcasse radiale et plus particulièrement un pneumatique destiné à équiper des véhicules portant de lourdes charges et roulant à vitesse soutenue, tels que, par exemple les camions, tracteurs, remorques ou bus routiers.

L'armature de renforcement ou renforcement des pneumatiques et notamment des pneumatiques de véhicules de type poids-lourds est à l'heure actuelle - et le plus souvent - constituée par empilage d'une ou plusieurs nappes désignées classiquement « nappes de carcasse », «nappes sommet », etc. Cette façon de désigner les armatures de renforcement provient du procédé de fabrication, consistant à réaliser une série de produits semi-finis en forme de nappes, pourvues de renforts filaires souvent longitudinaux, qui sont par la suite assemblées ou empilées afin de confectionner une ébauche de pneumatique. Les nappes sont réalisées à plat, avec des dimensions importantes, et sont par la suite coupées en fonction des dimensions d'un produit donné. L'assemblage des nappes est également réalisé, dans un premier temps, sensiblement à plat. L'ébauche ainsi réalisée est ensuite mise en forme pour adopter le profil toroïdal typique des pneumatiques. Les produits semi-finis dits « de finition » sont ensuite appliqués sur l'ébauche, pour obtenir un produit prêt pour la vulcanisation.

Un tel type de procédé "classique" implique, en particulier pour la phase de fabrication de l'ébauche du pneumatique, l'utilisation d'un élément d'ancrage (généralement une tringle), utilisé pour réaliser l'ancrage ou le maintien de l'armature de carcasse dans la zone des bourrelets du pneumatique. Ainsi, pour ce type de procédé, on effectue un retournement d'une portion de toutes les nappes composant l'armature de carcasse (ou d'une partie seulement) autour d'une tringle disposée dans le bourrelet du pneumatique. On crée de la sorte un ancrage de l'armature de carcasse dans le bourrelet.

La généralisation dans l'industrie de ce type de procédé classique, malgré de nombreuses variantes dans la façon de réaliser les nappes et les assemblages, a conduit l'homme du métier à utiliser un vocabulaire calqué sur le procédé ; d'où la terminologie généralement admise, comportant notamment les termes «nappes», «carcasse», «tringle», «conformation» pour désigner le passage d'un profil plat à un profil toroïdal, etc.

Il existe aujourd'hui des pneumatiques qui ne comportent à proprement parler pas de «nappes» ou de «tringles» d'après les définitions précédentes. Par exemple, le document EP 0 582 196 décrit des pneumatiques fabriqués sans l'aide de produits semi-finis sous forme de nappes. Par exemple, les éléments de renforcement des différentes structures de renfort sont appliqués directement sur les couches adjacentes de mélanges caoutchouteux, le tout étant appliqué par couches successives sur un noyau toroïdal dont la forme permet d'obtenir directement un profil s'apparentant au profil final du pneumatique en cours de fabrication. Ainsi, dans ce cas, on ne retrouve plus de «semi-finis», ni de «nappes», ni de «tringle». Les produits de base tels les mélanges caoutchouteux et les éléments de renforcement sous forme de fils ou filaments, sont directement appliqués sur le noyau. Ce noyau étant de forme toroïdale, on n'a plus à former l'ébauche pour passer d'un profil plat à un profil sous forme de tore.

Par ailleurs, les pneumatiques décrits dans ce document ne disposent pas du "traditionnel" retournement de nappe carcasse autour d'une tringle. Ce type d'ancrage est remplacé par un agencement dans lequel on dispose de façon adjacente à ladite structure de renfort de flanc des fils circonférentiels, le tout étant noyé dans un mélange caoutchouteux d'ancrage ou de liaison.

Il existe également des procédés d'assemblage sur noyau toroïdal utilisant des produits semi-finis spécialement adaptés pour une pose rapide, efficace et simple sur un noyau central. Enfin, il est également possible d'utiliser un mixte comportant à la fois certains produits semi-finis pour réaliser certains aspects architecturaux (tels que des nappes, tringles, etc), tandis que d'autres sont réalisés à partir de l'application directe de mélanges et/ou d'élément de renforcement.

Dans le présent document, afin de tenir compte des évolutions technologiques récentes tant dans le domaine de la fabrication que pour la conception de produits, les termes classiques tels que «nappes», «tringles», etc., sont avantageusement remplacés par des termes neutres ou indépendants du type de procédé utilisé. Ainsi, le terme «renfort de type carcasse» ou «renfort de flanc» est valable pour désigner les éléments de renforcement d'une nappe carcasse dans le procédé classique, et les éléments de renforcement correspondants, en général appliqués au niveau des flancs, d'un pneumatique produit selon un procédé sans semi-finis. Le terme «zone d'ancrage» pour sa part, peut désigner tout autant le "traditionnel" retournement de nappe carcasse autour d'une tringle d'un procédé classique, que l'ensemble formé par les éléments de renforcement circonférentiels, le mélange caoutchouteux et les portions adjacentes de renfort de flanc d'une zone basse réalisée avec un procédé avec application sur un noyau toroïdal.

D'une manière générale dans les pneumatiques de type poids-lourds, l'armature de carcasse est ancrée de part et d'autre dans la zone du bourrelet et est surmontée radialement par une armature de sommet constituée d'au moins deux couches, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, peuvent encore être recouvertes d'au moins une couche dite de protection et formée d'éléments de renforcement avantageusement métalliques et extensibles, dits élastiques. Elle peut également comprendre une couche de fils ou câbles métalliques à faible extensibilité faisant avec la direction circonférentielle un angle compris entre 45° et 90°, cette nappe, dite de triangulation, étant radialement située entre l'armature de carcasse et la première nappe de sommet dite de travail, formées de fils ou câbles parallèles présentant des angles au plus égaux à 45° en valeur absolue. La nappe de triangulation forme avec au moins ladite nappe de travail une armature triangulée, qui présente, sous les différentes contraintes qu'elle subit, peu de déformations, la nappe de triangulation ayant pour rôle essentiel de reprendre les efforts de compression transversale dont est l'objet l'ensemble des éléments de renforcement dans la zone du sommet du pneumatique.

Dans le cas des pneumatiques pour véhicules "Poids-Lourds", une seule couche de protection est habituellement présente et ses éléments de protection sont, dans la plupart des cas, orientés dans la même direction et avec le même angle en valeur absolue que ceux des éléments de renforcement de la couche de travail radialement la plus à l'extérieur et donc radialement adjacente. Dans le cas de pneumatiques de Génie Civil destinés aux roulages sur sols plus ou moins accidentés, la présence de deux couches de protection est avantageuse, les éléments de renforcement étant croisés d'une couche à la suivante et les éléments de renforcement de la couche de protection radialement intérieure étant croisés avec les éléments de renforcement inextensibles de la couche de travail radialement extérieure et adjacente à ladite couche de protection radialement intérieure.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre ; par contre l'endurance de ce dernier est pénalisée. Pour autoriser un voire deux rechapages de tels pneumatiques afin d'allonger leur durée de vie, il est nécessaire de conserver une structure et notamment une armature de carcasse dont les propriétés d'endurance sont suffisantes pour supporter lesdits rechapages.

Les roulages prolongés dans des conditions particulièrement sévères des pneumatiques ainsi construits font effectivement apparaître des limites en termes d'endurance de ces pneumatiques.

Les éléments de l'armature de carcasse sont notamment soumis à des contraintes de flexion et compression lors des roulages qui vont à l'encontre de leur endurance. Les câbles qui constituent les éléments de renforcement des couches de carcasse sont en effet soumis à des contraintes importantes lors du roulage des pneumatiques, notamment à des flexions ou variations de courbure répétées induisant au niveau des fils des frottements, et donc de l'usure, ainsi que de la fatigue ; Ce phénomène est qualifié de "fatigue-fretting".

Pour remplir leur fonction de renforcement de l'armature de carcasse du pneumatique, lesdits câbles doivent tout d'abord présenter une bonne flexibilité et une endurance élevée en flexion, ce qui implique notamment que leurs fils présentent un diamètre relativement faible, de préférence inférieur à 0,28 mm, plus préférentiellement inférieur à 0,25 mm, plus petit généralement que celui des fils utilisés dans les câbles conventionnels pour les armatures de sommet des pneumatiques.

Les câbles de l'armature de carcasse sont également sujets à des phénomènes dits de "fatigue-corrosion" dus à la nature même des câbles qui favorisent le passage voire drainent des agents corrosifs tels que l'oxygène et l'humidité. En effet, l'air ou l'eau qui pénètrent dans le pneumatique par exemple lors d'une dégradation lors d'une coupure ou plus simplement du fait de la perméabilité, même faible de la surface intérieure du pneumatique, peuvent être conduits par les canaux formés au sein des câbles du fait même de leur structure.

Tous ces phénomènes de fatigue que l'on regroupe généralement sous le terme générique de "fatigue-fretting-corrosion" sont à l'origine d'une dégénérescence progressive des propriétés mécaniques des câbles et peuvent affecter, pour les conditions de roulage les plus sévères, la durée de vie de ces derniers.

Pour améliorer l'endurance de ces câbles de l'armature de carcasse, il est notamment connu d'augmenter l'épaisseur de la couche de caoutchouc qui forme la paroi interne de la cavité du pneumatique pour limiter au mieux la perméabilité de ladite couche. Cette couche est habituellement pour partie composée de butyle de façon à augmenter l'étanchéité du pneumatique. Ce type de matériau présente l'inconvénient d'augmenter le coût du pneumatique.

Il est encore connu de modifier la construction desdits câbles afin notamment d'augmenter leur pénétrabilité par le caoutchouc, et ainsi limiter la dimension du passage des agents oxydants.

Par ailleurs, l'usage de pneumatiques sur des véhicules de type poids-lourds à usage routier, notamment lorsqu'ils sont en monte jumelée sur un essieu moteur ou sur des remorques conduit à des utilisations non voulues en mode dégonflé. En effet, les analyses réalisées montrent qu'il est fréquent que des pneumatiques soient utilisés en mode sous-gonflé sans que le chauffeur s'en aperçoive. Des pneumatiques sous-gonflés sont ainsi régulièrement utilisés sur des distances parcourues non négligeables. Le pneumatique ainsi utilisé subit des déformations plus importantes que dans les conditions normales d'utilisation qui peuvent conduire à une déformation des câbles de l'armature de carcasse de type « flambement » qui sont fortement pénalisant notamment pour supporter les contraintes liées aux pressions de gonflage.

Afin de limiter ce problème lié au risque de flambement des éléments de renforcement de l'armature de carcasse, il est connu d'utiliser des câbles frettés par un fil supplémentaire entourant le câble et prévenant tous risques de flambement du câble ou des fils constitutifs du câble. Les pneumatiques ainsi réalisés, s'ils présentent moins de risques d'endommagement liés à des roulages à faible pression de gonflage, présentent des performances en termes d'endurance en flexion atténuées du fait notamment du frottement entre le fil de frette et les fils extérieurs du câble lors des déformations du pneumatique en roulage.

Il est encore connu pour pallier à ce problème de flambement des câbles lors de roulage avec un pneumatique sous-gonflé, d'augmenter au moins localement, dans les zones en vis-à-vis de la zone de l'armature de carcasse susceptible de présenter un flambement, l'épaisseur de la couche de caoutchouc qui forme la paroi interne de la cavité du pneumatique. Comme expliqué précédemment une augmentation, même locale, de l'épaisseur de la couche de caoutchouc séparant l'armature de carcasse de la cavité du pneumatique conduit à un coût du pneumatique plus élevé.

Des pneumatiques connus sont décrit dans FR 2873721, EP 160 2780, FR 2795751, US 5824170 et EP 0760298.

Les inventeurs se sont ainsi donnés pour mission de fournir des pneumatiques pour véhicules lourds de type "Poids-Lourds", dont les performances d'usure sont conservées pour des usages routiers et dont les performances notamment d'endurance sont améliorées notamment au regard des phénomènes de "fatigue-corrosion" ou de "fatigue-fretting-corrosion", quelles que soient les conditions de roulage notamment en termes de gonflage et dont le coût de fabrication reste acceptable.

Ce but a été atteint selon l'invention par un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles non frettés présentant au test dit de perméabilité un débit inférieur à 20 cm$^3$/mn, dans un plan radial, au moins sur une partie du profil méridien du pneumatique, l'épaisseur de mélange caoutchouteux entre la surface intérieure de la cavité du pneumatique et le point d'un élément de renforcement métallique de l'armature de carcasse le plus proche de la dite surface intérieure de la cavité étant inférieure ou égale à 3.5 mm et dans un plan radial, le rapport entre des épaisseurs de mélange caoutchouteux entre la surface intérieure de la cavité du pneumatique et le point d'un élément de renforcement métallique de l'armature de carcasse le plus proche de la dite surface intérieure de la cavité de deux parties distinctes du pneumatique étant supérieur à 1.15 et de préférence supérieur à 1.35.

Le test dit de perméabilité permet de déterminer la perméabilité longitudinale à l'air des câbles testés, par mesure du volume d'air traversant une éprouvette sous pression constante pendant un temps donné. Le principe d'un tel test, bien connu de l'homme du métier, est de démontrer l'efficacité du traitement d'un câble pour le rendre imperméable à l'air ; il a été décrit par exemple dans la norme ASTM D2692-98.

Le test est réalisé sur des câbles extraits directement, par décorticage, des nappes de caoutchouc vulcanisées qu'ils renforcent, donc pénétrés par le caoutchouc cuit.

Le test est réalisé sur 2 cm de longueur de câble, enrobé donc par sa composition de caoutchouc (ou gomme d'enrobage) environnante à l'état cuit, de la manière suivante : on envoie de l'air à l'entrée du câble, sous une pression de 1 bar, et on mesure le volume d'air à la sortie, à l'aide d'un débitmètre (calibré par exemple de 0 à 500 cm$^3$/min). Pendant la mesure, l'échantillon de câble est bloqué dans un joint étanche comprimé (par exemple un joint en mousse dense ou en caoutchouc) de telle manière que seule la quantité d'air traversant le câble d'une extrémité à l'autre, selon son axe longitudinal, est prise en compte par la mesure ; l'étanchéité du joint étanche lui-même est contrôlée préalablement à l'aide d'une éprouvette de caoutchouc pleine, c'est-à-dire sans câble.

Le débit d'air moyen mesuré (moyenne sur 10 éprouvettes) est d'autant plus faible que l'imperméabilité longitudinale du câble est élevée. La mesure étant faite avec une précision de $\pm$ 0,2 cm$^3$/min, les valeurs mesurées inférieures ou égales à 0,2 cm$^3$/min sont considérées comme nulles ; elles correspondent à un câble qui peut être qualifié d'étanche (totalement étanche) à l'air selon son axe (i.e., dans sa direction longitudinale).

Ce test de perméabilité constitue en outre un moyen simple de mesure indirecte du taux de pénétration du câble par une composition de caoutchouc. Le débit mesuré est d'autant plus faible que le taux de pénétration du câble par le caoutchouc est élevé.

Des câbles présentant au test dit de perméabilité un débit inférieur à 20 cm3/mn présentent un taux de pénétration supérieure à 66%.

Le taux de pénétration d'un câble peut encore être estimé selon la méthode décrite ci-après. Dans le cas d'un câble à couches, la méthode consiste dans un premier temps à éliminer la couche extérieure sur un échantillon d'une longueur comprise entre 2 et 4 cm pour ensuite mesurer selon une direction longitudinale et selon un axe donné la somme des longueurs de mélange caoutchouteux rapporté sur la longueur de l'échantillon. Ces mesures de longueurs de mélange caoutchouteux excluent les espaces non pénétrés sur cet axe longitudinal. Ces mesures sont répétées sur trois axes longitudinaux répartis sur la périphérie de l'échantillon et répétées sur cinq échantillons de câbles.

Lorsque le câble comporte plusieurs couches, la première étape d'élimination est répétée avec la couche nouvellement extérieure et les mesures de longueurs de mélange caoutchouteux selon des axes longitudinaux.

Une moyenne de tous les rapports de longueurs de mélange caoutchouteux sur les longueurs des échantillons ainsi déterminés est ensuite effectuée pour définir le taux de pénétration du câble.

L'épaisseur de mélange caoutchouteux entre la surface intérieure de la cavité du pneumatique et le point d'un élément de renforcement le plus proche de la dite surface est égale à la longueur de la projection orthogonale de l'extrémité du point d'un élément de renforcement le plus proche de la dite surface sur la surface intérieure de la cavité du pneumatique.

Les mesures d'épaisseur de mélange caoutchouteux sont effectuées sur une coupe transversale d'un pneumatique, le pneumatique étant donc dans un état non gonflé.

Selon un mode de réalisation préféré de l'invention, les câbles de l'armature de carcasse présentent au test dit de perméabilité un débit inférieur à 10 $cm^3$/mn et de préférence encore inférieur à 2 $cm^3$/mn.

Selon une réalisation avantageuse de l'invention, l'épaisseur de mélange caoutchouteux entre la surface intérieure de la cavité du pneumatique et le point d'un élément de renforcement métallique de l'armature de carcasse le plus proche de la dite surface intérieure de la cavité est inférieure ou égale à 3.5 mm sur au moins deux tiers du profil méridien du pneumatique.

Les inventeurs ont su mettre en évidence qu'un pneumatique ainsi réalisé selon l'invention conduit à des améliorations en termes de compromis endurance coûts de fabrication très intéressants. En effet, les propriétés d'endurance avec un tel pneumatique sont au moins aussi bonnes qu'avec les meilleures solutions évoquées ci-dessus que ce soit dans des conditions de roulage normales ou bien dans des conditions de roulage en mode sous-gonflé. Par ailleurs, l'épaisseur de la couche de mélange caoutchouteux entre l'armature de carcasse et la cavité du pneumatique étant au moins localement réduite par rapport à des pneumatiques usuelles et celle-ci constituant un des composants les plus onéreux du pneumatique, le coût de fabrication du pneumatique est inférieur à celui d'un pneumatique usuel. Les câbles de l'armature de carcasse présentant au test dit de perméabilité un débit inférieur à 20 $cm^3$/mn permettent d'une part de limiter les risques liés à la corrosion et d'autre part semble conférer un effet contre le flambement permettant ainsi de réduire au mieux l'épaisseur des mélanges caoutchouteux entre la surface intérieure de la cavité du pneumatique et l'armature de carcasse. Sur certaines zones du profil méridien du pneumatique, l'épaisseur de la couche de mélange caoutchouteux entre l'armature de carcasse et la cavité du pneumatique est prévue selon l'invention plus importante pour limiter au mieux tous risques de corrosion des câbles par exemple aux niveaux des zones les plus sollicités en termes de contraintes de flexion dans les conditions nominales d'utilisation.

Selon un mode de réalisation préférée de l'invention, dans un plan radial, au moins sur une partie du profil méridien du pneumatique, l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 3.5 mm et de préférence supérieure à 4 mm.

De préférence encore, la longueur méridienne d'une partie du profil du pneumatique dont l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 3.5 mm est comprise entre 5 et 20 mm.

Avantageusement selon l'invention, l'épaisseur de mélange caoutchouteux entre la surface intérieure de la cavité du pneumatique et le point d'un élément de renforcement métallique de l'armature de carcasse le plus proche de la dite surface intérieure de la cavité est inférieure ou égale à 3.5 mm lorsque la différence de courbure entre la partie concernée du profil méridien de l'armature de carcasse dans la zone déformée du fait de l'écrasement dans l'aire de contact et dans la zone à l'opposé de l'aire de contact est inférieure à 0.008 $mm^{-1}$, dans les conditions nominales d'utilisation.

La partie concernée du profil méridien de l'armature de carcasse est la partie entourant ledit point d'un élément de renforcement métallique où la mesure de l'épaisseur est effectuée.

De la même façon, l'épaisseur de mélange caoutchouteux entre la surface intérieure de la cavité du pneumatique et le point d'un élément de renforcement métallique de l'armature de carcasse le plus proche de la dite surface intérieure de la cavité est avantageusement supérieure à 3.5 mm lorsque la différence de courbure entre la partie concernée du profil méridien de l'armature de carcasse dans la zone déformée du fait de l'écrasement dans l'aire de contact et dans la zone à l'opposé de l'aire de contact est supérieure à 0.008 $mm^{-1}$, dans les conditions nominales d'utilisation. Ces parties du profil méridien correspondent aux parties du pneumatique les plus sollicitées par déformation et sont par exemples les zones des flancs du pneumatique au regard des crochets de la roue sur laquelle le pneumatique est montée ou bien encore les zones du pneumatiques correspondant aux épaules de celui-ci.

Selon une variante préférée de réalisation de l'invention, la longueur méridienne du profil du pneumatique comporte au plus quatre parties dont l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 3.5 mm.

Selon cette variante de l'invention, au moins deux parties du profil du pneumatique dont l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 3.5 mm sont centrées à plus ou moins 20 mm, mesurés sur l'abscisse curviligne de la surface intérieure de la cavité du pneumatique du pneumatique, sur la projection orthogonale des extrémités d'épaulement du pneumatique sur la surface intérieure du pneumatique.

Au sens de l'invention, une extrémité d'épaulement est définie, dans la zone de l'épaule du pneumatique, par la projection orthogonale sur la surface extérieure du pneumatique de l'intersection des tangentes aux surfaces d'une extrémité axialement extérieure de la bande de roulement (sommet des sculptures) d'une part et de l'extrémité radialement extérieure d'un flanc d'autre part.

Selon cette variante de l'invention encore, au moins deux parties du profil du pneumatique dont l'épaisseur de mélange caoutchouteux entre la surface intérieure de la cavité du pneumatique et le point d'un élément de renforcement métallique de l'armature de carcasse le plus proche de la dite surface intérieure de la cavité est supérieure à 3.5 mm sont centrées à plus ou moins 20 mm, mesurés sur l'abscisse curviligne de la surface intérieure de la cavité du pneumatique du pneumatique, sur la projection orthogonale sur la surface intérieure du pneumatique des points de la surface externe du pneumatique destinés à venir au contact du point radialement le plus extérieur d'un crochet de jante.

Selon une réalisation préférée de l'invention, le mélange caoutchouteux entre la cavité du pneumatique et les éléments de renforcement de la couche d'armature de carcasse radialement la plus à l'intérieure étant constitué d'au moins deux couches de mélange caoutchouteux, au niveau des parties du profil méridien du pneumatique présentant une épaisseur de mélange caoutchouteux entre la surface intérieure de la cavité du pneumatique et le point d'un élément de renforcement métallique de l'armature de carcasse le plus proche de la dite surface intérieure de la cavité inférieure ou égale à 3.5 mm, la couche de mélange caoutchouteux radialement la plus à l'intérieur présente une épaisseur inférieure à 2 mm et de préférence inférieure à 1.8 mm. Comme expliqué précédemment, cette couche est habituellement pour partie composée de butyle de façon à augmenter l'étanchéité du pneumatique et ce type de matériau présentant un coût non négligeable, la diminution de cette couche est favorable.

De préférence encore selon l'invention, dans un plan radial, sur au moins la partie du profil méridien du pneumatique sur laquelle l'épaisseur de mélange caoutchouteux entre la surface intérieure de la cavité du pneumatique et le point d'un élément de renforcement métallique de l'armature de carcasse le plus proche de la dite surface intérieure de la cavité est inférieure ou égale à 3.5 mm, l'épaisseur du mélange caoutchouteux formant la surface intérieure de la cavité du pneumatique est inférieure à 1.7 mm.

Selon cette réalisation préférée de l'invention, il est prévu dans les zones de moindre épaisseur de la couche de mélange caoutchouteux entre l'armature de carcasse et la cavité du pneumatique, l'épaisseur du mélange caoutchouteux formant la surface intérieure de la cavité du pneumatique est inférieure à 1.7 mm. Ce mélange caoutchouteux formant la surface intérieure de la cavité du pneumatique, constitué le plus souvent de butyle, est un matériau dont le coût est non négligeable dans la constitution du pneumatique. Une réduction de son épaisseur à des valeurs inférieures à 1.7 mm sur une partie du profil méridien du pneumatique conduit avantageusement à un coût moindre du pneumatique.

Avantageusement encore, dans un plan radial, le rapport entre des épaisseurs du mélange caoutchouteux formant la surface intérieure de la cavité du pneumatique de deux parties distinctes du pneumatique est supérieur à 1.15.

De préférence encore selon l'invention, au niveau des parties du profil méridien du pneumatique présentant une épaisseur de mélange caoutchouteux entre la surface intérieure de la cavité du pneumatique et le point d'un élément de renforcement métallique de l'armature de carcasse le plus proche de la dite surface intérieure de la cavité inférieure ou égale à 3.5 mm, la couche de mélange caoutchouteux radialement adjacente à la couche de mélange caoutchouteux radialement la plus à l'intérieur présente une épaisseur inférieure à 2.5 mm et de préférence inférieure à 2 mm. L'épaisseur de cette couche dont les constituants permettent notamment de fixer l'oxygène de l'air peut également être réduite de façon à diminuer encore le coût du pneumatique.

Les épaisseurs de chacune de ces deux couches sont égales à la longueur de la projection orthogonale d'un point d'une surface sur l'autre surface de ladite couche.

Selon un mode de réalisation avantageux de l'invention, les éléments de renforcement métalliques d'au moins une couche de l'armature de carcasse sont des câbles à au moins deux couches, au moins une couche interne étant gainée d'une couche constituée d'une composition de caoutchouc réticulable ou réticulée, de préférence à base d'au moins un élastomère diénique.

L'invention propose encore un pneumatique à armature de carcasse radiale, constituée d'au moins une couche d'éléments de renforcement, ledit pneumatique comprenant une armature de sommet, elle-même coiffée radialement d'une bande de roulement, ladite bande de roulement étant réunie à deux bourrelets par l'intermédiaire de deux flancs, les éléments de renforcement métalliques d'au moins une couche de l'armature de carcasse étant des câbles non frettés à au moins deux couches, au moins une couche interne étant gainée d'une couche constituée d'une composition de caoutchouc réticulable ou réticulée, de préférence à base d'au moins un élastomère diénique et dans un plan radial, au moins sur une partie du profil méridien du pneumatique, l'épaisseur de mélange caoutchouteux entre la surface intérieure de la cavité du pneumatique et le point d'un élément de renforcement métallique de l'armature de carcasse le plus proche de la dite surface intérieure de la cavité étant inférieure ou égale à 3.5 mm et dans un plan radial, le rapport entre des épaisseurs de mélange caoutchouteux entre la surface intérieure de la cavité du pneumatique et le point d'un élément de renforcement métallique de l'armature de carcasse le plus proche de la dite surface intérieure de la cavité de deux parties distinctes du pneumatique étant supérieur à 1.15 et de préférence supérieur à 1.35.

Par l'expression "composition à base d'au moins un élastomère diénique", on entend de manière connue que la composition comprend à titre majoritaire (i.e. selon une fraction massique supérieure à 50%) ce ou ces élastomères diéniques.

On notera que la gaine selon l'invention s'étend d'une manière continue autour de la couche qu'elle recouvre (c'est-à-dire que cette gaine est continue dans la direction "orthoradiale" du câble qui est perpendiculaire à son rayon), de manière à former un manchon continu de section transversale qui est avantageusement pratiquement circulaire.

On notera également que la composition de caoutchouc de cette gaine est réticulable ou réticulée, c'est-à-dire qu'elle comprend par définition un système de réticulation adapté pour permettre la réticulation de la composition lors de sa cuisson (i.e., son durcissement et non sa fusion) ; ainsi, cette composition de caoutchouc peut être qualifiée d'infusible, du fait qu'elle ne peut pas être fondue par chauffage à quelque température que ce soit.

Par élastomère ou caoutchouc "diénique", on entend de manière connue un élastomère issu au moins en partie (i.e. un homopolymère ou un copolymère) de monomères diènes (monomères porteurs de deux doubles liaisons carbone-carbone, conjuguées ou non).

Les élastomères diéniques peuvent être classés de manière connue en deux catégories : ceux dits "essentiellement insaturés" et ceux dits "essentiellement saturés". De manière générale, on entend ici par élastomère diénique "essentiellement insaturé" un élastomère diénique issu au moins en partie de monomères diènes conjugués, ayant un taux de motifs ou unités d'origine diénique (diènes conjugués) qui est supérieur à 15% (% en moles). C'est ainsi, par exemple, que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans le câble de l'invention :

(a) tout homopolymère obtenu par polymérisation d'un monomère diène conjugué ayant de 4 à 12 atomes de carbone;

(b) tout copolymère obtenu par copolymérisation d'un ou plusieurs diènes conjugués entre eux ou avec un ou plusieurs composés vinyle aromatique ayant de 8 à 20 atomes de carbone;

(c) un copolymère ternaire obtenu par copolymérisation d'éthylène, d'une $\alpha$-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;

(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, la présente invention est en premier lieu mise en oeuvre avec des élastomères diéniques essentiellement insaturés, en particulier du type (a) ou (b) ci-dessus.

Ainsi, l'élastomère diénique est préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

De préférence encore selon l'invention, l'élastomère diénique choisi est majoritairement (c'est-à-dire pour plus de 50 pce) constitué d'un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

Selon un mode avantageux de l'invention, l'élastomère diénique choisi est exclusivement (c'est-à-dire pour 100 pce) constitué de caoutchouc naturel, de polyisoprène de synthèse ou d'un mélange de ces élastomères, le polyisoprène de synthèse ayant un taux (% molaire) de liaisons cis-1,4 de préférence supérieur à 90%, plus préférentiellement encore supérieur à 98%.

On pourrait aussi utiliser, selon un mode de réalisation particulier de l'invention, des coupages (mélanges) de ce caoutchouc naturel et/ou ces polyisoprènes de synthèse avec d'autres élastomères diéniques fortement insaturés, notamment avec des élastomères SBR ou BR tels que précités.

La gaine de caoutchouc du câble de l'invention peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères, par exemple des polymères thermoplastiques, ces polymères autres qu'élastomères étant alors présents à titre de polymère minoritaire.

Bien que la composition de caoutchouc de ladite gaine soit préférentiellement dépourvue de tout plastomère et qu'elle ne comporte qu'un élastomère (ou mélange d'élastomères) diénique(s) comme base polymérique, ladite composition pourrait aussi comprendre au moins un plastomère selon une fraction massique $x_p$ inférieure à la fraction massique $x_e$ du(des) élastomère(s). Dans un tel cas, on a de préférence la relation suivante : $0 < x_p < 0,5. x_e$, et plus préférentiellement: $0 < x_p < 0,1. x_e$.

De préférence, le système de réticulation de la gaine de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, plus préférentiellement compris entre 1 et 8 pce, l'accélérateur primaire de vulcanisation, par exemple un sulfénamide, est utilisé à un taux préférentiel compris entre 0,5 et 10 pce, plus préférentiellement compris entre 0,5 et 5,0 pce.

La composition de caoutchouc de la gaine selon l'invention comprend, outre ledit système de réticulation, tous les ingrédients habituels utilisables dans les compositions de caoutchouc pour pneumatiques, tels que des charges renforçantes à base de noir de carbone et/ou d'une charge inorganique renforçante telle que silice, des agents anti-vieillissement, par exemple des antioxydants, des huiles d'extension, des plastifiants ou des agents facilitant la mise en oeuvre des compositions à l'état cru, des accepteurs et donneurs de méthylène, des résines, des bismaléimides, des systèmes promoteurs d'adhésion connus du type "RFS" (résorcinol-formaldéhyde-silice) ou sels métalliques, notamment des sels de cobalt.

De préférence, la composition de la gaine de caoutchouc présente, à l'état réticulé, un module sécant en extension à 10% d'allongement (noté M10), mesuré selon la norme ASTM D 412 de 1998, inférieur à 20 MPa et plus préférentiellement inférieur à 12 MPa, en particulier entre 4 et 11 MPa.

A titre préférentiel, la composition de cette gaine est choisie identique à la composition utilisée pour la matrice de caoutchouc que les câbles selon l'invention sont destinés à renforcer. Ainsi, il n'y a aucun problème d'incompatibilité éventuelle entre les matériaux respectifs de la gaine et de la matrice de caoutchouc.

De préférence, ladite composition est à base de caoutchouc naturel et elle comprend du noir de carbone à titre de charge renforçante, par exemple un noir de carbone de grade (ASTM) 300, 600 ou 700 (par exemple N326, N330, N347, N375, N683, N772).

Selon une variante de l'invention, les éléments de renforcement métalliques d'au moins une couche de l'armature de carcasse sont des câbles métalliques à couches de construction [L+M] ou [L+M+N] utilisable comme élément de renforcement d'une armature de carcasse de pneumatique, comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, une gaine constituée d'une composition de caoutchouc réticulable ou réticulée à base d'au moins un élastomère diénique, recouvrant, dans la construction [L+M], ladite première couche C1 et, dans la construction [L+M+N], au moins ladite couche C2.

De préférence, le diamètre des fils de la première couche de la couche interne (C1) est compris entre 0.10 et 0.5 mm et le diamètre des fils des couches externes (C2, C3) est compris entre 0.10 et 0.5 mm.

De préférence encore, le pas d'hélice d'enroulement desdits fils de la couche externe (C3) est compris entre 8 et 25 mm.

Au sens de l'invention, le pas représente la longueur, mesurée parallèlement à l'axe du câble, au bout de laquelle un fil ayant ce pas effectue un tour complet autour de l'axe du câble ; ainsi, si l'on sectionne l'axe par deux plans perpendiculaires audit axe et séparés par une longueur égale au pas d'un fil d'une couche constitutive du câble, l'axe de ce fil a dans ces deux plans la même position sur les deux cercles correspondant à la couche du fil considéré.

Avantageusement, le câble présente l'une, et plus préférentiellement encore l'ensemble des caractéristiques suivantes qui est vérifié(e) :

- la couche C3 est une couche saturée, c'est-à-dire qu'il n'existe pas suffisamment de place dans cette couche pour y ajouter au moins un (N+1)ème fil de diamètre $d_3$, N représentant alors le nombre maximal de fils enroulables en une couche autour de la couche C2 ;

- la gaine de caoutchouc recouvre en outre la couche interne C1 et/ou sépare les fils deux à deux adjacents de la couche intermédiaire C2 ;
- la gaine de caoutchouc recouvre pratiquement la demi-circonférence radialement intérieure de chaque fil de la couche C3, de telle sorte qu'elle sépare les fils deux à deux adjacents de cette couche C3.

Dans la construction L+M+N selon l'invention, la couche intermédiaire C2 comporte de préférence six ou sept fils, et le câble conforme à l'invention présente alors les caractéristiques préférentielles suivantes ($d_1$, $d_2$, $d_3$, $p_2$ et $p_3$ en mm) :

- (i) $0,10 < d_1 < 0,28$ ;
- (ii) $0,10 < d_2 < 0,25$ ;
- (iii) $0,10 < d_3 < 0,25$ ;
- (iv) $M = 6$ ou $M = 7$ ;
- (v) $5 \pi (d_1 + d_2) < p_2 \leq p_3 < 5 \pi (d_1 + 2d_2 + d_3)$ ;
- (vi) les fils desdites couches C2, C3 sont enroulés dans le même sens de torsion (S/S ou Z/Z).

De préférence, la caractéristique (v) est telle que $p_2 = p_3$, de telle sorte que le câble est dit compact compte tenu par ailleurs de la caractéristique (vi) (fils des couches C2 et C3 enroulés dans le même sens).

Selon la caractéristique (vi), tous les fils des couches C2 et C3 sont enroulés dans le même sens de torsion, c'est-à-dire soit dans la direction S (disposition "S/S"), soit dans la direction Z (disposition "Z/Z"). L'enroulement dans le même sens des couches C2 et C3 permet avantageusement, dans le câble conforme à l'invention, de minimiser les frottements entre ces deux couches C2 et C3 et donc l'usure des fils qui les constituent (puisqu'il n'y a plus de contact croisé entre les fils).

De préférence, le câble de l'invention est un câble à couches de construction notée 1+M+N, c'est-à-dire que sa couche interne C1 est constituée d'un seul fil.

Avantageusement encore, les rapports ($d_1/d_2$) sont de préférence fixés dans des limites données, selon le nombre M (6 ou 7) de fils de la couche C2, comme suit :

pour      M = 6 :     $0,9 < (d_1 / d_2) < 1,3$ ;
pour      M = 7 :     $1,3 < (d_1 / d_2) < 1,6$ .

Une valeur trop faible du rapport $d_1 / d_2$ peut être préjudiciable à l'usure entre la couche interne et les fils de la couche C2. Une valeur trop élevée peut quant à elle nuire à la compacité du câble, pour un niveau de résistance en définitive peu modifié, ainsi qu'à sa flexibilité ; la rigidité accrue de la couche interne C1 due à un diamètre $d_1$ trop élevé pourrait être par ailleurs préjudiciable à la faisabilité elle-même du câble, lors des opérations de câblage.

Les fils des couches C2 et C3 peuvent avoir un diamètre identique ou différent d'une couche à l'autre. On utilise de préférence des fils de même diamètre ($d_2 = d_3$), notamment pour simplifier le procédé de câblage et abaisser les coûts.

Le nombre maximal $N_{max}$ de fils enroulables en une couche unique saturée C3 autour de la couche C2 est bien entendu fonction de nombreux paramètres (diamètre $d_1$ de la couche interne, nombre M et diamètre $d_2$ des fils de la couche C2, diamètre $d_3$ des fils de la couche C3).

L'invention est de préférence mise en oeuvre avec un câble choisi parmi les câbles de structure 1+6+10, 1+6+11, 1+6+12, 1+7+11, 1+7+12 ou 1+7+13.

Pour un meilleur compromis entre résistance, faisabilité et tenue en flexion du câble, d'une part, et pénétrabilité par le caoutchouc, d'autre part, on préfère que les diamètres des fils des couches C2 et C3, identiques ou non, soient compris entre 0,12 mm et 0,22 mm.

Dans un tel cas, on a plus préférentiellement les relations suivantes qui sont vérifiées :

$$0,14 < d_1 < 0,22 ;$$

$$0,12 < d_2 \leq d_3 < 0,20 ;$$

$$5 < p_2 \leq p_3 < 12$$

(pas en mm réduits) ou bien $20 < p_2 \leq p_3 < 30$ (pas en mm élevés).

Un diamètre inférieur à 0,19 mm permet de réduire le niveau des contraintes subies par les fils lors des variations importantes de courbure des câbles, alors qu'on choisit de préférence des diamètres supérieurs à 0,16 mm pour des raisons notamment de résistance des fils et de coût industriel.

Un mode de réalisation avantageux consiste par exemple à choisir $p_2$ et $p_3$ compris entre 8 et 12 mm, avantageusement avec des câbles de structure 1+6+12.

De préférence, la gaine de caoutchouc présente une épaisseur moyenne allant de 0,010 mm à 0,040 mm.

D'une manière générale, l'invention peut être mise en oeuvre, pour former les câbles de l'armature de carcasse ci-dessus décrits, avec tout type de fils métalliques, notamment en acier, par exemple des fils en acier au carbone et/ou des fils en acier inoxydable. On utilise de préférence un acier au carbone, mais il est bien entendu possible d'utiliser d'autres aciers ou d'autres alliages.

Lorsqu'un acier au carbone est utilisé, sa teneur en carbone (% en poids d'acier) est de préférence comprise entre 0,1% et 1,2%, plus préférentiellement de 0,4% à 1,0% ; ces teneurs représentent un bon compromis entre les propriétés mécaniques requises pour le pneumatique et la faisabilité du fil. Il est à noter qu'une teneur en carbone comprise entre 0,5% et 0,6% rend de tels aciers finalement moins coûteux car plus faciles à tréfiler. Un autre mode avantageux de réalisation de l'invention peut consister aussi, selon les applications visées, à utiliser des aciers à faible teneur en carbone, comprise par exemple entre 0,2% et 0,5%, en raison notamment d'un coût plus bas et d'une plus grande facilité de tréfilage.

Le câble selon l'invention pourra être obtenu selon différentes techniques connues de l'homme du métier, par exemple en deux étapes, tout d'abord par gainage via une tête d'extrusion de l'âme ou structure intermédiaire L+M (couches C1+C2), étape suivie dans un deuxième temps d'une opération finale de câblage ou retordage des N fils restants (couche C3) autour de la couche C2 ainsi gainée. Le problème de collant à l'état cru posé par la gaine de caoutchouc, lors des opérations intermédiaires éventuelles de bobinage et débobinage pourra être résolu de manière connue par l'homme du métier, par exemple par l'emploi d'un film intercalaire en matière plastique.

Selon une variante de réalisation de l'invention, l'armature de sommet du pneumatique est formée d'au moins deux couches de sommet de travail d'éléments de renforcement inextensibles, croisés d'une couche à l'autre en faisant avec la direction circonférentielle des angles compris entre 10° et 45°.

Selon d'autres variantes de réalisation de l'invention, l'armature de sommet comporte encore au moins une couche d'éléments de renforcement circonférentiels.

Une réalisation préférée de l'invention prévoit encore que l'armature de sommet est complétée radialement à l'extérieur par au moins une couche supplémentaire, dite de protection, d'éléments de renforcement dits élastiques, orientés par rapport à la direction circonférentielle avec un angle compris entre 10° et 45° et de même sens que l'angle formé par les éléments inextensibles de la couche de travail qui lui est radialement adjacente.

La couche de protection peut avoir une largeur axiale inférieure à la largeur axiale de la couche de travail la moins large. Ladite couche de protection peut aussi avoir une largeur axiale supérieure à la largeur axiale de la couche de travail la moins large, telle qu'elle recouvre les bords de la couche de travail la moins large et, dans le cas de la couche radialement supérieure comme étant le moins large, telle qu'elle soit couplée, dans le prolongement axial de l'armature additionnelle, avec la couche de sommet de travail la plus large sur une largeur axiale, pour être ensuite, axialement à l'extérieur, découplée de ladite couche de travail la plus large par des profilés d'épaisseur au moins égale à 2 mm. La couche de protection formée d'éléments de renforcement élastiques peut, dans le cas cité ci-dessus, être d'une part éventuellement découplée des bords de ladite couche de travail la moins large par des profilés d'épaisseur sensiblement moindre que l'épaisseur des profilés séparant les bords des deux couches de travail, et avoir d'autre part une largeur axiale inférieure ou supérieure à la largeur axiale de la couche de sommet la plus large.

Selon l'un quelconque des modes de réalisation de l'invention évoqué précédemment, l'armature de sommet peut encore être complétée, radialement à l'intérieur entre l'armature de carcasse et la couche de travail radialement intérieure la plus proche de ladite armature de carcasse, par une couche de triangulation d'éléments de renforcement inextensibles métalliques en acier faisant, avec la direction circonférentielle, un angle supérieur à 60° et de même sens que celui de l'angle formé par les éléments de renforcement de la couche radialement la plus proche de l'armature de carcasse.

D'autres détails et caractéristiques avantageux de l'invention ressortiront ci-après de la description des exemples de réalisation de l'invention en référence aux figures 1 à 3 qui représentent :

- figure1a, une vue méridienne d'un schéma d'un pneumatique selon un mode de réalisation de l'invention,

- figure1b, une vue partielle agrandie d'une partie du schéma de la figure 1a,

- figure1c, une vue partielle agrandie d'une autre partie du schéma de la figure 1a,

- figure 2, une représentation schématique d'une vue en coupe d'un câble d'armature de carcasse du pneumatique de la figure 1,

- figure 3, une représentation schématique d'une vue en coupe d'un premier autre exemple de câble d'armature de carcasse selon l'invention,

- figure 4, une représentation schématique d'une vue en coupe d'un deuxième autre exemple de câble d'armature de carcasse selon l'invention.

Les figures ne sont pas représentées à l'échelle pour en simplifier la compréhension.

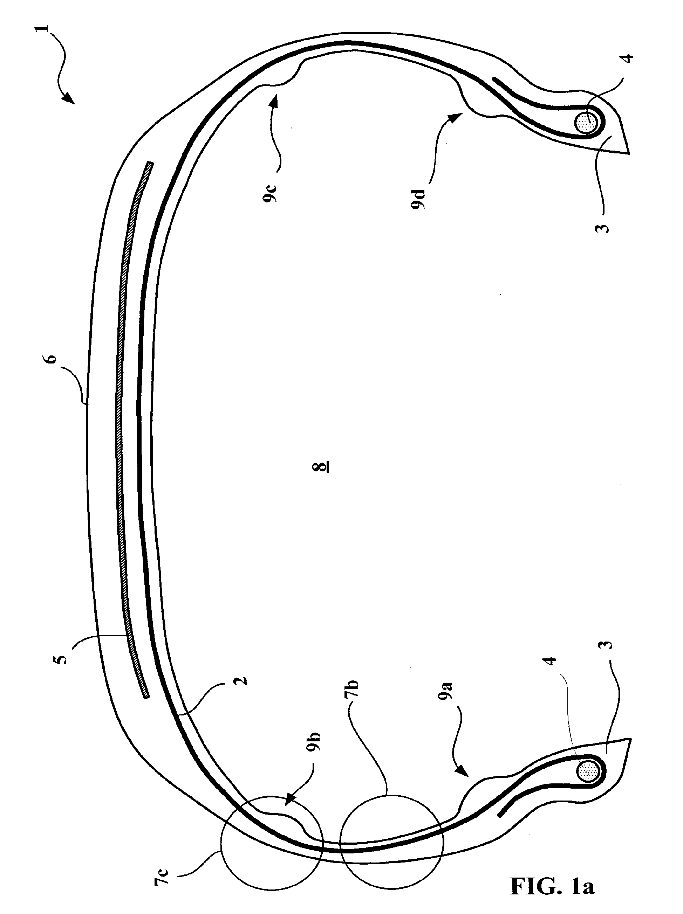

Sur la figure 1a, le pneumatique 1, de dimension 315/70 R 22.5, comprend une armature de carcasse radiale 2 ancrée dans deux bourrelets 3, autour de tringles 4. L'armature de carcasse 2 est formée d'une seule couche de câbles métalliques 11 et de deux couches de calandrage 13. L'armature de carcasse 2 est frettée par une armature de sommet 5, elle-même coiffée d'une bande de roulement 6. L'armature de sommet 5 est formée radialement de l'intérieur à l'extérieur :

- d'une première couche de travail formée de câbles métalliques inextensibles 11.35 non frettés, continus sur toute la largeur de la nappe, orientés d'un angle égal à 18°,

- d'une seconde couche de travail formée de câbles métalliques inextensibles 11.35 non frettés, continus sur toute la largeur de la nappe, orientés d'un angle égal à 18° et croisés aux câbles métalliques de la première couche de travail,

- d'une couche de protection formées de câbles métalliques élastiques 6x35.

L'ensemble de ces couches constituant l'armature de sommet 5 n'est pas représenté en détail sur les figures.

La surface intérieure 10 délimitant la cavité du pneumatique présente des irrégularités telles que des formes en bosses correspondant conformément à l'invention à des parties 9a, 9b, 9c, 9d présentant une épaisseur entre la surface intérieure 10 et l'armature de carcasse 2 plus importante que sur le reste du profil méridien du pneumatique.

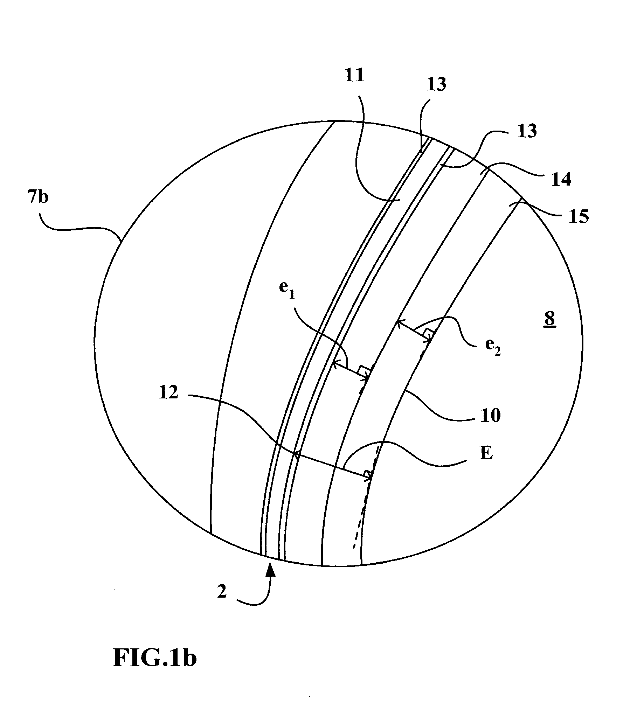

La figure 1b illustre un agrandissement de la zone 7b de la figure 1a et indique notamment l'épaisseur E de mélange caoutchouteux entre la surface intérieure 10 de la cavité 8 du pneumatique et le point 12 d'un élément de renforcement 11 le plus proche de ladite surface 10. Cette épaisseur E est égale à la longueur de la projection orthogonale du point 12 d'un élément de renforcement 11 le plus proche de ladite surface 10 sur la surface 10. Cette épaisseur E est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, des épaisseurs $e_1$, $e_2$ des différentes couches 14, 15 de mélange caoutchouteux formant la paroi interne du pneumatique 1. Ces épaisseurs $e_1$, $e_2$ sont par ailleurs égales à la longueur de la projection orthogonale d'un point d'une surface sur l'autre surface de la couche concernée respectivement 14 ou 15.

Ces mesures d'épaisseur sont effectuées sur une coupe transversale du pneumatique, celui-ci étant par conséquent non monté et non gonflé.

La valeur de E mesurée est égale à 3.2 mm.

Les valeurs de $e_1$ et $e_2$ sont respectivement égales à 1.4 mm et 1.6 mm.

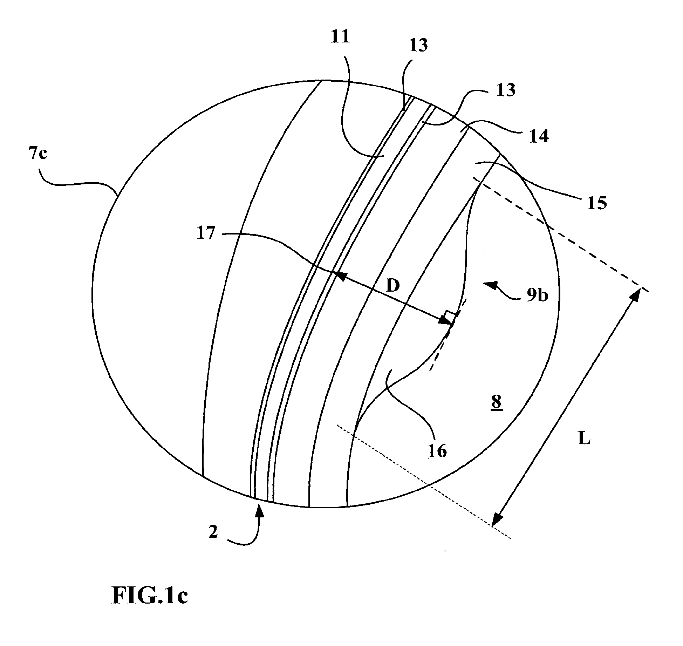

La figure 1c illustre un agrandissement de la zone 7c de la figure 1a et indique notamment l'épaisseur D de mélange caoutchouteux entre la surface intérieure 10 de la cavité 8 du pneumatique et le point 17 d'un élément de renforcement 11 le plus proche de ladite surface 10 au niveau de la partie 9b. Cette épaisseur D est égale à la longueur de la projection orthogonale du point 17 d'un élément de renforcement 11 le plus proche de ladite surface 10 sur la surface 10 au lieu de la plus grande épaisseur au niveau de la partie 9b. Cette épaisseur D est la somme des épaisseurs des différents mélanges caoutchouteux mis en place entre ledit élément de renforcement 11 de l'armature de carcasse 2 ; il s'agit d'une part de l'épaisseur de la couche de calandrage 13 radialement intérieure de l'armature de carcasse et d'autre part, des épaisseurs respectives des différentes couches 14, 15, 16 de mélange caoutchouteux formant la paroi interne du pneumatique 1.

La couche 15 est comme décrite précédemment pour partie composée de butyle de façon à augmenter l'étanchéité du pneumatique. La couche 14 comporte avantageusement des constituants permettant notamment de fixer l'oxygène de l'air. La diminution des épaisseurs de ces deux couches est favorable à une diminution du coût du pneumatique, les matériaux constituants ces couches présentant des coûts non négligeables. La couche 16 prévue localement sur le profil méridien du pneumatique dans la partie 9b est avantageusement semblable à la couche 15 en termes de composition pour venir renforcer la fonction étanchéité dans une zone du pneumatique fortement sollicitée en termes de déformation. Les parties concernées 9a, 9b, 9c, 9d correspondent aux épaules du pneumatique et aux zones du pneumatique correspondant aux crochets de roue sur laquelle sera monté le pneumatique.

L'épaisseur D au niveau de la partie 9b est égale à 4.7 mm et donc supérieure à 4 mm.

Le rapport des épaisseurs D sur E est égal à 1.47 et donc supérieur à 1.15.

La longueur L correspondant à la longueur méridienne de la surépaisseur de la partie 9b est égale à 15 mm et donc comprise entre 5 et 20 mm. La somme des longueurs des surépaisseurs des quatre parties 9a, 9b, 9c, 9d est égale à 60 mm et correspond à 8.6 % de la longueur du profil méridien de la paroi 10 du pneumatique 1.

La représentation de la figure 1c montre une couche 16 supplémentaire pour partie composée de butyle ajoutée localement au niveau de la cavité du pneumatique. La nature de la couche 16 pourrait, selon d'autres variantes de réalisation de l'invention, être différente. D'autre part, la réalisation de surépaisseurs locales pourrait encore être obtenue par exemple en modifiant localement les épaisseurs respectives de l'une et/ou l'autre des couches 14 et 15 ou bien en intercalant localement une ou plusieurs couches entre les couches 14 et 15 ou bien encore entre l'armature de carcasse 2 et la couche 14.

Des augmentations locales de l'épaisseur entre la surface intérieure 10 et l'armature de carcasse 2 vont à l'encontre de la diminution du coût du pneumatique mais conduise à un compromis endurance/coût satisfaisant.

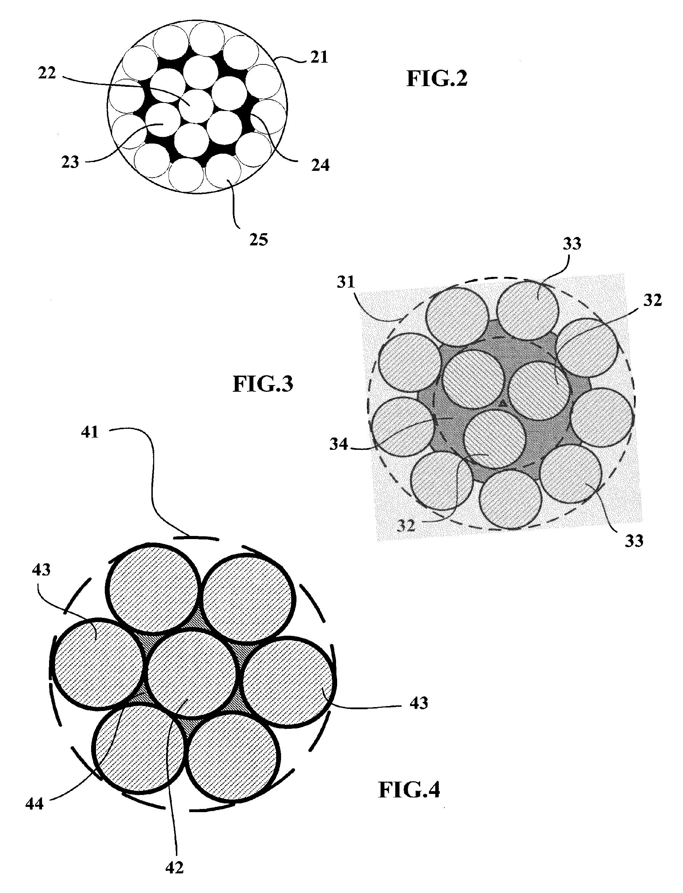

La figure 2 illustre une représentation schématique de la section d'un câble 21 d'armature de carcasse du pneumatique 1 de la figure 1. Ce câble 21 est un câble à couche de structure 1+6+12, non fretté, constitué d'un noyau central formée d'un fil 22, d'une couche intermédiaire formée de six fils 23 et d'une couche externe formée de douze fils 25.

Il présente les caractéristiques suivantes (d et p en mm) :

- structure 1+6+12 ;
- $d_1$ = 0.20 (mm);
- $d_2$ = 0.18 (mm);
- $p_2$ = 10 (mm)
- $d_3$ = 0.18 (mm);
- $p_2$ = 10 (mm),
- $(d_2/d_3)$ = 1 ;

avec $d_2$, $p_2$, respectivement le diamètre et le pas d'hélice de la couche intermédiaire et $d_3$ et $p_3$, respectivement le diamètre et le pas de d'hélice des fils de la couche externe.

L'âme du câble constitué du noyau central formé du fil 22 et de la couche intermédiaire formée des six fils 23 est gainé par une composition de caoutchouc 24 à base d'élastomère diénique non vulcanisé (à l'état cru). Le gainage est obtenu via une tête d'extrusion de l'âme constituée du fil 22 entouré des six fils 23, suivi d'une opération finale de retordage ou câblage des 12 fils 25 autour de l'âme ainsi gainé.

L'aptitude à la pénétration du câble 31, mesurée selon la méthode décrite précédemment, est égale à 95 %.

La composition élastomérique constituant la gaine de caoutchouc 24 est réalisée à partir d'une composition telle que décrite précédemment et présente dans le cas présent la même formulation, à base de caoutchouc naturel et de noir de carbone, que celle des couches de calandrage 13 de l'armature de carcasse que les câbles sont destinés à renforcer.

La figure 3 illustre une représentation schématique de la section d'un autre câble 31 d'armature de carcasse pouvant être utilisé dans un pneumatique selon l'invention. Ce câble 31 est un câble à couche de structure 3+9, non fretté, constitué d'une âme centrale formée d'un câble constitué de trois fils 32 retordus entre eux et d'une couche externe formée de neuf fils 33.

Il présente les caractéristiques suivantes (d et p en mm) :

- structure 3+9 ;
- $d_1$ = 0.18 (mm);
- $p_2$ = 5 (mm)
- $(d_1/d_2)$ = 1 ;
- $d_2$ = 0.18 (mm);
- $p_2$ = 10 (mm),

avec $d_1$, p1, respectivement le diamètre et le pas d'hélice des fils de l'âme centrale et $d_2$ et $p_2$, respectivement le diamètre et le pas de d'hélice des fils de la couche externe.

L'âme centrale constituée d'un câble formé des trois fils 32 a été gainée par une composition de caoutchouc 34 à base d'élastomère diénique non vulcanisé (à l'état cru). Le gainage est obtenu via une tête d'extrusion du câble 32, suivi d'une opération finale de câblage des 9 fils 33 autour de l'âme ainsi gainée.

L'aptitude à la pénétration du câble 31, mesurée selon la méthode décrite précédemment, est égale à 95 %.

La figure 4 illustre une représentation schématique de la section d'un autre câble 41 d'armature de carcasse pouvant être utilisé dans un pneumatique selon l'invention. Ce câble 41 est un câble à couche de structure 1+6, non fretté, constitué d'un noyau central formé d'un fil 42 et d'une couche externe formée de six fils 43.

Il présente les caractéristiques suivantes (d et p en mm) :

- structure 1+6 ;
- $d_1$ = 0,200 (mm);
- $(d_1/d_2)$ = 1,14 ;
- $d_2$ = 0,175 (mm);
- $p_2$ = 10 (mm),

avec $d_1$, le diamètre du noyau et $d_2$ et $p_2$, respectivement le diamètre et le pas d'hélice des fils de la couche externe.

Le noyau central constitué du fil 42 a été gainée par une composition de caoutchouc 44 à base d'élastomère diénique non vulcanisé (à l'état cru). Le gainage est obtenu via une tête d'extrusion du fil 42, suivi d'une opération finale de câblage des 6 fils 43 autour du noyau ainsi gainé.

L'aptitude à la pénétration du câble 41, mesurée selon la méthode décrite précédemment, est égale à 95 %.

Des essais ont été réalisés avec des pneumatiques réalisés selon l'invention conformément à la représentation des figures 1 et 2, et d'autres avec des pneumatiques dits de référence.

Ces pneumatiques de référence différent des pneumatiques selon l'invention par des câbles de l'armature de carcasse ne comportant la couche de gainage 24 et l'épaisseur E de mélange caoutchouteux entre la surface intérieure de la cavité du pneumatique et le point d'un élément de renforcement le plus proche de ladite surface étant égale à 5 mm, chacune des épaisseurs $e_1$ et $e_2$ étant égales à 2.5 mm sur tout le profil méridien du pneumatique.

Des essais d'endurance en roulage sur volant ont été réalisés sur une machine de tests imposant aux pneumatiques une charge de 4415 daN et une vitesse de 40 km/h, avec un gonflage des pneumatiques dopé en oxygène. Les essais ont été réalisés pour les pneumatiques selon l'invention avec des conditions identiques à celles appliquées aux pneumatiques de référence. Les roulages sont arrêtés dès que les pneumatiques présentent des dégradations de l'armature de carcasse.

Les essais ainsi réalisés ont montré que les distances parcourues lors de chacun de ces tests sont favorables pour les pneumatiques selon l'invention qui totalisent plus de 350 000 km alors que les pneumatiques de référence n'ont parcourus que 250 000 km.

D'autres essais d'endurance en roulage sur essieu moteur de véhicule ont été réalisés en imposant aux pneumatiques une charge de 3680 daN et une vitesse de 40 km/h, avec un gonflage des pneumatiques de 0.2 bar. Les essais ont été réalisés pour les pneumatiques selon l'invention avec des conditions identiques à celles appliquées aux pneumatiques de référence. Les roulages sont menés sur une distance de 12 000 km ou sont arrêtés dès que les pneumatiques présentent des dégradations de l'armature de carcasse.

Les essais ainsi réalisés ont montré que les distances parcourues lors de chacun de ces tests avec les pneumatiques selon l'invention ont toujours permis d'atteindre les 12 000 km alors que les pneumatiques de référence n'ont parcourus au maximum que 10 000 km.

En outre, les coûts de fabrication des pneumatiques selon l'invention sont moins élevés, le coût des matériaux étant 10 % moins élevé dans le cas des pneumatiques selon l'invention.

Par ailleurs, les pneumatiques selon l'invention présentent l'avantage d'être moins lourd avec un allègement de 6 % par rapport aux pneumatiques de référence.

**Revendications**

1. Pneumatique (1) à armature de carcasse radiale (2), constituée d'au moins une couche d'éléments de renforcement métalliques (11), ledit pneumatique comprenant une armature de sommet (5), elle-même coiffée radialement d'une bande de roulement (6), ladite bande de roulement étant réunie à deux bourrelets (3) par l'intermédiaire de deux flancs, **caractérisé en ce que** les éléments de renforcement métalliques d'au moins une couche de l'armature de carcasse (2) sont des câbles (21, 31, 41) non frettés présentant au test dit de perméabilité un débit inférieur à 20 cm$^3$/mn, **en ce que**, dans un plan radial, au moins sur une partie du profil méridien du pneumatique, l'épaisseur (E) de mélange caoutchouteux entre la surface intérieure (10) de la cavité (8) du pneumatique et le point (12) d'un élément de renforcement (11) métallique de l'armature de carcasse (2) le plus proche de la dite surface intérieure (10) de la cavité (8) est inférieure ou égale à 3.5 mm et **en ce que**, dans un plan radial, le rapport entre des épaisseurs (E, D) de mélange caoutchouteux entre la surface intérieure (10) de la cavité (8) du pneumatique et le point (12, 17) d'un élément de renforcement (11) métallique de l'armature de carcasse (2) le plus proche de la dite surface intérieure (10) de la cavité (8) de deux parties distinctes (7b, 7c) du pneumatique est supérieur à 1.15.

2. Pneumatique (1) selon la revendication 1, **caractérisé en ce que** les éléments de renforcement métalliques (11) d'au moins une couche de l'armature de carcasse (2) sont des câbles (21, 31, 41) à au moins deux couches et **en ce qu'**au moins une couche interne est gainée d'une couche (24, 34, 44) constituée d'une composition de caoutchouc réticulable ou réticulée, de préférence à base d'au moins un élastomère diénique.

3. Pneumatique (1) selon la revendication 1 ou 2, **caractérisé en ce que** les câbles (21, 31, 41) présentent au test dit de perméabilité un débit inférieur à 10 cm$^3$/mn et de préférence inférieur à 2 cm$^3$/mm

4. Pneumatique (1) selon l'une des revendications précédentes, **caractérisé en ce que**, dans un plan radial, sur au moins la partie du profil méridien du pneumatique sur laquelle l'épaisseur (E) de mélange caoutchouteux entre la surface intérieure (10) de la cavité (8) du pneumatique et le point (12) d'un élément de renforcement (11) métallique de l'armature de carcasse (2) le plus proche de la dite surface intérieure (10) de la cavité (8) est inférieure ou égale à 3.5 mm, l'épaisseur ($e_2$) du mélange caoutchouteux formant la surface intérieure de la cavité du pneumatique est inférieure à 1.7 mm.

5. Pneumatique (1) selon l'une des revendications précédentes, **caractérisé en ce que**, dans un plan radial, le rapport entre des épaisseurs ($e_2$) du mélange caoutchouteux formant la surface intérieure (10) de la cavité du pneumatique de deux parties distinctes (7b, 7c) du pneumatique est supérieur à 1.15

6. Pneumatique (1) selon l'une des revendications précédentes, **caractérisé en ce que** l'épaisseur (E) de mélange caoutchouteux entre la surface intérieure (10) de la cavité (8) du pneumatique et le point d'un élément de renforcement métallique (11) de l'armature de carcasse le plus proche de la dite surface intérieure (10) de la cavité (8) est inférieure ou égale à 3.5 mm sur au moins deux tiers du profil méridien du pneumatique.

7. Pneumatique (1) selon l'une des revendications précédentes, **caractérisé en ce que** dans un plan radial, au moins sur une partie du profil méridien du pneumatique, l'épaisseur (D) de mélange caoutchouteux entre la surface intérieure (10) de la cavité (8) du pneumatique et le point (7) d'un élément de renforcement (11) métallique de l'armature de carcasse (2) le plus proche de la dite surface intérieure (10) de la cavité (8) est supérieure à 3.5 mm et de préférence supérieure à 4 mm.

8. Pneumatique (1) selon la revendication 7, **caractérisé en ce que** la longueur méridienne d'une partie du profil du pneumatique dont l'épaisseur (D) de mélange caoutchouteux entre la surface intérieure (10)

de la cavité (8) du pneumatique et le point (17) d'un élément de renforcement (11) métallique de l'armature de carcasse (2) le plus proche de la dite surface intérieure (10) de la cavité (8) est supérieure à 3.5 mm est comprise entre 5 et 20 mm.

9. Pneumatique (1) selon la revendication 8, **caractérisé en ce que** la longueur méridienne du profil du pneumatique comporte au plus quatre parties (9a, 9b, 9c, 9d) dont l'épaisseur (D) de mélange caoutchouteux entre la surface intérieure (10) de la cavité (8) du pneumatique et le point (17) d'un élément de renforcement (11) métallique de l'armature de carcasse (2) le plus proche de la dite surface intérieure (10) de la cavité (8) est supérieure à 3.5 mm.

10. Pneumatique (1) selon la revendication 8 ou 9, **caractérisé en ce qu'**au moins deux parties (9b, 9c) du profil du pneumatique dont l'épaisseur (D) de mélange caoutchouteux entre la surface intérieure (10) de la cavité (8) du pneumatique et le point (17) d'un élément de renforcement (11) métallique de l'armature de carcasse (2) le plus proche de la dite surface intérieure (10) de la cavité (8) est supérieure à 3.5 mm sont centrées à plus ou moins 20 mm, sur la projection orthogonale des extrémités d'épaulement du pneumatique sur la surface intérieure (10) du pneumatique.

11. Pneumatique (1) selon l'une des revendications 8 à 10, **caractérisé en ce qu'**au moins deux parties (9a, 9d) du profil du pneumatique dont l'épaisseur (D) de mélange caoutchouteux entre la surface intérieure (10) de la cavité (8) du pneumatique et le point (17) d'un élément de renforcement (11) métallique de l'armature de carcasse (2) le plus proche de la dite surface intérieure (10) de la cavité (8) est supérieure à 3.5 mm sont centrées à plus ou moins 20 mm, sur la projection orthogonale sur la surface intérieure du pneumatique des points de la surface externe du pneumatique destinés à venir au contact du point radialement le plus extérieur d'un crochet de jante.

12. Pneumatique (1) selon l'une des revendications précédentes, **caractérisé en ce que** les éléments de renforcement métalliques (11) d'au moins une couche de l'armature de carcasse sont des câbles (21, 31, 41) métalliques à couches de construction [L+M] ou [L+M+N] utilisable comme élément de renforcement d'une armature de carcasse de pneumatique, comportant une première couche C1 à L fils de diamètre $d_1$ avec L allant de 1 à 4, entourée d'au moins une couche intermédiaire C2 à M fils de diamètre $d_2$ enroulés ensemble en hélice selon un pas $p_2$ avec M allant de 3 à 12, ladite couche C2 étant éventuellement entourée d'une couche externe C3 de N fils de diamètre $d_3$ enroulés ensemble en hélice selon un pas $p_3$ avec N allant de 8 à 20, et **en ce qu'**une gaine (24, 34, 44) constituée d'une composition de caoutchouc réticulable ou réticulée à base d'au moins un élastomère diénique, recouvre, dans la construction [L+M], ladite première couche C1 et, dans la construction [L+M+N], au moins ladite couche C2.

13. Pneumatique (1) selon l'une des revendications précédentes, **caractérisé en ce que** l'armature de sommet (5) est formée d'au moins deux couches de sommet de travail d'éléments de renforcement inextensibles, croisés d'une couche à l'autre en faisant avec la direction circonférentielle des angles compris entre 10° et 45°.

14. Pneumatique (1) selon l'une des revendications précédentes, **caractérisé en ce que** l'armature de sommet (5) comporte encore au moins une couche d'éléments de renforcement circonférentiels.

**Patentansprüche**

1. Reifen (1) mit radialer Karkassenbewehrung (2), welche aus mindestens einer Schicht metallischer Verstärkungselemente (11) besteht, wobei der Reifen eine Scheitelbewehrung (5) aufweist, die ihrerseits radial von einem Laufstreifen (6) bedeckt wird, wobei der Laufstreifen über zwei Seitenwände mit zwei Wülsten (3) verbunden ist, **dadurch gekennzeichnet, dass** die metallischen Verstärkungselemente mindestens einer Schicht der Karkassenbewehrung (2) nicht bandagierte Seile (21, 31, 41) sind, die beim sogenannten Permeabilitätstest einen Durchsatz von weniger als 20 cm³/min aufweisen, dadurch, dass in einer radialen Ebene wenigstens auf einem Teil des Meridianprofils des Reifens die Dicke (E) der Kautschukmischung zwischen der Innenfläche (10) des Hohlraums (8) des Reifens und dem Punkt (12) eines metallischen Verstärkungselements (11) der Karkassenbewehrung (2), welcher dieser Innenfläche (10) des Hohlraums (8) am nächsten ist, kleiner oder gleich 3,5 mm ist, und dadurch, dass in einer radialen Ebene das Verhältnis zwischen Dicken (E, D) der Kautschukmischung zwischen der Innenfläche (10) des Hohlraums (8) des Reifens und dem Punkt (12, 17) eines metallischen Verstärkungselements (11) der Karkassenbewehrung (2), welcher dieser Innenfläche (10) des Hohlraums (8) am nächsten ist, von zwei verschiedenen Teilen (7b, 7c) des Reifens größer als 1,15 ist.

2. Reifen (1) nach Anspruch 1, **dadurch gekennzeichnet, dass** die metallischen Verstärkungselemente (11) mindestens einer Schicht der Karkassenbewehrung (2) Seile (21, 31, 41) mit mindestens zwei Schichten sind, und dadurch, dass mindestens eine innere Schicht von einer Schicht (24, 34, 44) umhüllt ist, die aus einer vernetzbaren oder vernetzten Kautschukzusammensetzung besteht, vorzugsweise auf der Basis mindestens eines Dienelastomers.

3. Reifen (1) nach Anspruch 1 oder 2, **dadurch gekennzeichnet, dass** die Seile (21, 31, 41) beim sogenannten Permeabilitätstest einen Durchsatz von weniger als 10 $cm^3$/min und vorzugsweise weniger als 2 $cm^3$/min aufweisen.

4. Reifen (1) nach einem der vorhergehenden Ansprüche, **dadurch gekennzeichnet, dass** in einer radialen Ebene auf wenigstens dem Teil des Meridianprofils des Reifens, auf dem die Dicke (E) der Kautschukmischung zwischen der Innenfläche (10) des Hohlraums (8) des Reifens und dem Punkt (12) eines metallischen Verstärkungselements (11) der Karkassenbewehrung (2), welcher dieser Innenfläche (10) des Hohlraums (8) am nächsten ist, kleiner oder gleich 3,5 mm ist, die Dicke ($e_2$) der Kautschukmischung, welche die Innenfläche des Hohlraums des Reifens bildet, kleiner als 1,7 mm ist.

5. Reifen (1) nach einem der vorhergehenden Ansprüche, **dadurch gekennzeichnet, dass** in einer radialen Ebene das Verhältnis zwischen Dicken ($e_2$) der Kautschukmischung, welche die Innenfläche (10) des Hohlraums des Reifens bildet, von zwei verschiedenen Teilen (7b, 7c) des Reifens größer als 1,15 ist.

6. Reifen (1) nach einem der vorhergehenden Ansprüche, **dadurch gekennzeichnet, dass** die Dicke (E) der Kautschukmischung zwischen der Innenfläche (10) des Hohlraums (8) des Reifens und dem Punkt eines metallischen Verstärkungselements (11) der Karkassenbewehrung, welcher dieser Innenfläche (10) des Hohlraums (8) am nächsten ist, auf mindestens zwei Dritteln des Meridianprofils des Reifens kleiner oder gleich 3,5 mm ist.

7. Reifen (1) nach einem der vorhergehenden Ansprüche, **dadurch gekennzeichnet, dass** in einer radialen Ebene wenigstens auf einem Teil des Meridianprofils des Reifens die Dicke (D) der Kautschukmischung zwischen der Innenfläche (10) des Hohlraums (8) des Reifens und dem Punkt (17) eines metallischen Verstärkungselements (11) der Karkassenbewehrung (2), welcher dieser Innenfläche (10) des Hohlraums (8) am nächsten ist, größer als 3,5 mm und vorzugsweise größer als 4 mm ist.

8. Reifen (1) nach Anspruch 7, **dadurch gekennzeichnet, dass** die Meridianlänge eines Teils des Profils des Reifens, dessen Dicke (D) der Kautschukmischung zwischen der Innenfläche (10) des Hohlraums (8) des Reifens und dem Punkt (17) eines metallischen Verstärkungselements (11) der Karkassenbewehrung (2), welcher dieser Innenfläche (10) des Hohlraums (8) am nächsten ist, größer als 3,5 mm ist, zwischen 5 und 20 mm liegt.

9. Reifen (1) nach Anspruch 8, **dadurch gekennzeichnet, dass** die Meridianlänge des Profils des Reifens höchstens vier Teile (9a, 9b, 9c, 9d) aufweist, deren Dicke (D) der Kautschukmischung zwischen der Innenfläche (10) des Hohlraums (8) des Reifens und dem Punkt (17) eines metallischen Verstärkungselements (11) der Karkassenbewehrung (2), welcher dieser Innenfläche (10) des Hohlraums (8) am nächsten ist, größer als 3,5 mm ist.

10. Reifen (1) nach Anspruch 8 oder 9, **dadurch gekennzeichnet, dass** mindestens zwei Teile (9b, 9c) des Profils des Reifens, deren Dicke (D) der Kautschukmischung zwischen der Innenfläche (10) des Hohlraums (8) des Reifens und dem Punkt (17) eines metallischen Verstärkungselements (11) der Karkassenbewehrung (2), welcher dieser Innenfläche (10) des Hohlraums (8) am nächsten ist, größer als 3,5 mm ist, mit einer Genauigkeit von plus oder minus 20 mm auf der orthogonalen Projektion der Schulterenden des Reifens auf die Innenfläche (10) des Reifens zentriert sind.

11. Reifen (1) nach einem der Ansprüche 8 bis 10, **dadurch gekennzeichnet, dass** mindestens zwei Teile (9a, 9d) des Profils des Reifens, deren Dicke (D) der Kautschukmischung zwischen der Innenfläche (10) des Hohlraums (8) des Reifens und dem Punkt (17) eines metallischen Verstärkungselements (11) der Karkassenbewehrung (2), welcher dieser Innenfläche (10) des Hohlraums (8) am nächsten ist, größer als 3,5 mm ist, mit einer Genauigkeit von plus oder minus 20 mm auf der orthogonalen Projektion der Punkte der Außenfläche des Reifens, die dazu bestimmt sind, mit dem radial äußersten Punkt eines Felgenhakens in Kontakt zu kommen, auf die Innenfläche des Reifens zentriert sind.

12. Reifen (1) nach einem der vorhergehenden Ansprüche, **dadurch gekennzeichnet, dass** die metallischen Verstärkungselemente (11) mindestens einer Schicht der Karkassenbewehrung Metallseile (21, 31, 41) mit Schichten mit dem Aufbau [L+M] oder [L+M+N] sind, die als Verstärkungselemente einer Karkassenbewehrung des Reifens verwendbar sind und die eine erste Schicht C1 aus L Drähten mit einem Durchmesser $d_1$ mit L von 1 bis 4, umgeben von mindestens einer Zwischenschicht C2 aus M Drähten mit einem Durchmesser $d_2$, die zusammen mit einer Steigung $p_2$ schraubenförmig aufgewickelt sind, mit M von 3 bis 12, aufweisen, wobei die Schicht C2 möglicherweise von einer Außenschicht C3 aus N Drähten mit einem Durchmesser $d_3$, die zusammen mit einer Steigung $p_3$ schraubenförmig aufge-

wickelt sind, mit N von 8 bis 20, umgeben ist, und dadurch, dass eine aus einer vernetzbaren oder vernetzten Kautschukzusammensetzung auf der Basis mindestens eines Dienelastomers bestehende Hülle (24, 34, 44) in dem Aufbau [L+M] die erste Schicht C1 und in dem Aufbau [L+M+N] mindestens die Schicht C2 bedeckt.

13. Reifen (1) nach einem der vorhergehenden Ansprüche, **dadurch gekennzeichnet, dass** die Scheitelbewehrung (5) von mindestens zwei Arbeitsscheitelschichten aus nicht dehnbaren Verstärkungselementen gebildet wird, die sich von einer Schicht zur anderen kreuzen und dabei mit der Umfangsrichtung Winkel zwischen 10° und 45° bilden.

14. Reifen (1) nach einem der vorhergehenden Ansprüche, **dadurch gekennzeichnet, dass** die Scheitelbewehrung (5) außerdem mindestens eine Schicht von Umfangsverstärkungselementen aufweist.

## Claims

1. Tyre (1) having a radial carcass reinforcement (2), consisting of at least one layer of metal reinforcing elements (11), said tyre comprising a crown reinforcement (5), which is itself covered radially with a tread (6), said tread being joined to two beads (3) via two sidewalls, **characterized in that** the metal reinforcing elements of at least one layer of the carcass reinforcement (2) are non-hooped cords (21, 31, 41) having, in the permeability test, a flow rate of less than 20 cm$^3$/min, **in that**, in a radial plane, at least over part of the meridian profile of the tyre, the thickness (E) of the rubber compound between the inner surface (10) of the cavity (8) of the tyre and that point (12) of a metal reinforcing element (11) of the carcass reinforcement (2) which is closest to said inner surface (10) of the cavity (8) is less than or equal to 3.5 mm and **in that**, in a radial plane, the ratio between the thicknesses (E, D) of rubber compound between the inner surface (10) of the cavity (8) of the tyre and that point (12, 17) of a metal reinforcing element (11) of the carcass reinforcement (2) which is closest to said inner surface (10) of the cavity (8) of two distinct parts (7b, 7c) of the tyre is greater than 1.15.

2. Tyre (1) according to Claim 1, **characterized in that** the metal reinforcing elements (11) of at least one layer of the carcass reinforcement (2) are cords (21, 31, 41) having at least two layers and **in that** at least an inner layer is sheathed with a layer (24, 34, 44) consisting of a crosslinkable or crosslinked rubber composition, preferably one based on at least one diene elastomer.

3. Tyre (1) according to Claim 1 or 2, **characterized in that** the cords (21, 31, 41) have, in the permeability test, a flow rate of less than 10 cm$^3$/min and preferably less than 2 cm$^3$/min.

4. Tyre (1) according to one of the preceding claims, **characterized in that**, in a radial plane, over at least that part of the meridian profile of the tyre on which the thickness (E) of the rubber compound between the inner surface (10) of the cavity (8) of the tyre and that point (12) of a metal reinforcing element (11) of the carcass reinforcement (2) which is closest to said inner surface (10) of the cavity (8) is less than or equal to 3.5 mm, the thickness (e$_2$) of the rubber compound forming the inner surface of the cavity of the tyre is less than 1.7 mm.

5. Tyre (1) according to one of the preceding claims, **characterized in that**, in a radial plane, the ratio between the thicknesses (e$_2$) of the rubber compound forming the inner surface (10) of the cavity (8) of the tyre of two separate parts (7b, 7c) of the tyre is greater than 1.15.

6. Tyre (1) according to one of the preceding claims, **characterized in that** the thickness (E) of rubber compound between the inner surface (10) of the cavity (8) of the tyre and that point of a metal reinforcing element (11) of the carcass reinforcement which is closest to said inner surface (10) of the cavity (2) is less than or equal to 3.5 mm over at least two thirds of the meridian profile of the tyre.

7. Tyre (1) according to one of the preceding claims, **characterized in that**, in a radial plane, at least over part of the meridian profile of the tyre, the thickness (D) of rubber compound between the inner surface (10) of the cavity (8) of the tyre and that point (17) of a metal reinforcing element (11) of the carcass reinforcement (2) which is closest to said inner surface of the cavity is greater than 3.5 mm and preferably greater than 4 mm.

8. Tyre (1) according to Claim 7, **characterized in that**, the meridian length of a part of the profile of the tyre, of which the thickness (D) of rubber compound between the inner surface (10) of the cavity (8) of the tyre and that point (17) of a metal reinforcing element (11) of the carcass reinforcement (2) which is closest to said inner surface (10) of the cavity (8) is greater than 3.5 mm, is between 5 and 20 mm.

9. Tyre (1) according to Claim 8, **characterized in that**, the meridian length of the profile of the tyre comprises at most four parts (9a, 9b, 9c, 9d), the thickness (D) of rubber compound of which between the inner surface (10) of the cavity (8) of the tyre and that point (17) of a metal reinforcing element (11) of carcass reinforcement (2) which is closest to said inner surface (10) of the cavity (8) is greater than 3.5 mm.

10. Tyre (1) according to Claim 8 or 9, **characterized in that** at least two parts (9b, 9c) of the profile of the tyre, the thickness (D) of rubber compound of which between the inner surface (10) of the cavity (8) of the tyre and that point (17) of a metal reinforcing element (11) of the carcass reinforcement (2) which is closest to the said inner surface (10) of the cavity (8) is greater than 3.5 mm, are centred to within 20 mm on the orthogonal projection of the shoulder ends of the tyre onto the inner surface (10) of the tyre.

11. Tyre (1) according to one of Claims 8 to 10, **characterized in that** at least two parts (9a, 9d) of the profile of the tyre, the thickness (D) of rubber compound of which between the inner surface (10) of the cavity (8) of the tyre and that point (17) of a metal reinforcing element (11) of the carcass reinforcement (2) which is closest to said inner surface (10) of the cavity (8) is greater than 3.5 mm, are centred to within 20 mm on the orthogonal projection onto the inner surface of the tyre of the points on the outer surface of the tyre which are intended to come into contact with the radially outermost point of a rim flange.

12. Tyre (1) according to one of the preceding claims, **characterized in that** the metal reinforcing elements (11) of at least one layer of the carcass reinforcement are layered metal cords (21, 31, 41) of [L+M] or [L+M+N] construction usable as reinforcing element of a tyre carcass reinforcement, comprising a first layer C1 having L threads of diameter $d_1$ where L ranges from 1 to 4, surrounded by at least one intermediate layer C2 having M threads of diameter $d_2$ wound together in a helix with a pitch $p_2$ where M ranges from 3 to 12, said layer C2 being optionally surrounded by an outer layer C3 of N threads of diameter $d_3$ wound together in a helix with a pitch $p_3$, where N ranges from 8 to 20, and **in that** a sheath (24, 34, 44) consisting of a crosslinkable or crosslinked rubber composition based on at least one diene elastomer covers, in the [L+M] construction, said first layer C1 and, in the [L+M+N] construction, at least said layer C2.

13. Tyre (1) according to one of the preceding claims, **characterized in that** the crown reinforcement (5) is formed from at least two working crown layers of inextensible reinforcing elements, which are crossed from one layer to the other making angles of between 10° and 45° with the circumferential direction.

14. Tyre (1) according to one of the preceding claims, **characterized in that** the crown reinforcement (5) also includes at least one layer of circumferential reinforcing elements.

FIG. 1a

**FIG.1b**

**FIG.1c**

FIG.2

22

21

23

24

25

FIG.3

31

33

32

34

32

33

41

43

43

44

42

FIG.4

**EP 2 485 903 B1**

**RÉFÉRENCES CITÉES DANS LA DESCRIPTION**

**Documents brevets cités dans la description**

- EP 0582196 A
- FR 2873721
- EP 1602780 A
- FR 2795751
- US 5824170 A
- EP 0760298 A